# EUROPÄISCHE PATENTANMELDUNG

(11) **EP 4 830 501 A1**
(43) Veröffentlichungstag der Anmeldung: **28.10.2026**
(21) Anmeldenummer: 26168607.5
(22) Anmeldetag: 27.03.2026
(51) Int. Cl.: A01C 7/20, A01B 73/00, A01C 15/00, A01C 17/00

(54) **LANDWIRTSCHAFTLICHE VERTEILMASCHINE**

(30) Priorität: 23.04.2025 DE 102025115623
(71) Anmelder: Kverneland Group Nieuw-Vennep B.V., 2153 LR Nieuw-Vennep (NL)
(72) Erfinder: THYBAUT, Maarten, Nieuw-Vennep (NL)
(74) Vertreter: Schlegel, Sebastian

(57) **Zusammenfassung**

Die Erfindung betrifft eine landwirtschaftliche Verteilmaschine (1) mit einem Vorratsbehälter (7) für ein auszubringendes Material; einer Verteilvorrichtung (9), welche betreibbar ist, das auszubringende Material aus dem Vorratsbehälter (7) zu empfangen und zu verteilen; einem Rahmen (5), der einen Aufnahmeraum, in welchem die Verteilvorrichtung (9) angeordnet ist, wenigstens teilweise begrenzt; und Einfahrtaschen zum Aufnehmen von Gabelstaplerzinken an dem Rahmen (5), wobei die Einfahrtaschen zumindest abschnittsweise in den Rahmen (5) integriert gebildet sind.

## Beschreibung

Die Erfindung betrifft eine landwirtschaftliche Verteilmaschine zum Verteilen eines auszubringenden Materials, beispielsweise eines Düngermaterials.

### Hintergrund

Solche landwirtschaftlichen Verteilmaschinen werden verwendet, um ein auszubringendes Material im Betrieb auf einer Arbeitsfläche auszubringen. Hierbei wird das auszubringende Material regelmäßig in einem Vorratsbehälter der landwirtschaftlichen Verteilmaschine bereitgestellt und von diesem dosiert einer Verteilvorrichtung zugeführt, welche das auszubringende Material verteilt. Die dosierte Abgabe des auszubringenden Materials kann hierbei zum Beispiel ortsabhängig sowie einer Verteilkarte entsprechend ausgeführt werden.

### Zusammenfassung

Aufgabe der Erfindung ist es, eine landwirtschaftliche Verteilmaschine anzugeben, für die die betriebliche Handhabung vereinfacht und verbessert ist.

Zur Lösung ist eine landwirtschaftliche Verteilmaschine nach dem unabhängigen Anspruch 1 geschaffen. Ausgestaltungen sind Gegenstand von abhängigen Unteransprüchen.

Nach einem Aspekt ist eine landwirtschaftliche Verteilmaschine geschaffen, die Folgendes aufweist: einen Vorratsbehälter für ein auszubringendes Material; eine Verteilvorrichtung, welche betreibbar ist, das auszubringende Material aus dem Vorratsbehälter zu empfangen und zu verteilen; einen Rahmen, der einen Aufnahmeraum, in welchem die Verteilvorrichtung angeordnet ist, wenigstens teilweise begrenzt; und Einfahrtaschen zum Aufnehmen von Gabelstaplerzinken an dem Rahmen, wobei die Einfahrtaschen zumindest abschnittsweise in den Rahmen integriert gebildet sind.

Bei der landwirtschaftlichen Verteilmaschine sind die Einfahrtaschen zum Aufnehmen von Gabelstaplerzinken zumindest teilweise in den Rahmen bzw. die Rahmenbaugruppe integriert, mit diesem also einstückig ausgeführt. Auf diese Weise ist eine platzsparende Bereitstellung der Einfahrtaschen ermöglicht.

Die Einfahrtaschen sind jeweils mit einem Taschenraum, in welchem die Gabelstaplerzinken einführbar sind, und den Taschenraum umgebenden Taschenwänden gebildet. Hierbei kann vorgesehen sein, dass die Taschenwände, in dem Bereich, in welchem die Einfahrtaschen in den Rahmen integriert sind, wenigstens teilweise von Wandabschnitten des Rahmens gebildet sind.

Die Taschenwände der Einfahrtaschen können gegenüber benachbarten Wandabschnitten des Rahmens nicht vor- oder überstehend gebildet sein, sondern mit diesen in der Fläche fluchten, was die Platzersparnis weiter optimieren kann.

Auch hat die zumindest abschnittsweise Integration der Einfahrtaschen in den Rahmen den Vorteil, dass so die Bodenfreiheit der landwirtschaftlichen Verteilmaschine im Bereich des Rahmens vergrößert und verbessert wird, so dass zum Beispiel aufrechtstehende Pflanzen, die beim Ausbringen des Materials von der landwirtschaftlichen Verteilmaschine überfahren werden, nicht beeinträchtigt werden.

Der Rahmen und die Einfahrtaschen können als Teil einer Schweißbaugruppe gebildet sein. Rahmen und Einfahrtaschen bilden hier Bestandteile oder Komponenten ein und derselben Schweißbaugruppe. Beim Herstellen der Schweißbaugruppe können unterschiedliche Schweißverfahren Anwendung finden, was es ermöglicht, komplexe Baugruppen und -strukturen mit hoher mechanischer Stabilität zu schaffen.

Die den Rahmen und die Einfahrtaschen aufweisende Schweißbaugruppe kann von einem Basisrahmen trennbar sein. Mit Hilfe der in den Rahmen integrierten Einfahrtaschen ist so die Möglichkeit geschaffen, die Schweißbaugruppe, wahlweise zusammen mit weiteren Komponenten, die mit der Schweißbaugruppe verbunden sind, von einem Basisrahmen der landwirtschaftlichen Verteilmaschine abzunehmen und an diesen wieder anzubauen. Hierzu kann ein Gabelstapler verwendet werden, dessen Gabelstaplerzinken in die Einfahrtaschen eingreifen. Eine solche Ausgestaltung kann zum Beispiel vorgesehen sein, wenn die Verteilmaschine im Betrieb als Anhängefahrzeug von einem Schlepper gezogen wird. Die Schweißbaugruppe kann so vom Basisrahmen der Verteilmaschine getrennt werden. An dem Basisrahmen kann der Vorratsbehälter tragend aufgenommen sein.

Der Rahmen und / oder die Schweißbaugruppe können als Teil des Basisrahmens gebildet sein, so dass der Rahmen einen Teilrahmen des Basisrahmens bilden kann, welcher vom Basisrahmen trennbar ist.

An dem Rahmen können Standbeine angeordnet sein, die eingerichtet sind, die Schweißbaugruppe auf dem Boden abzustellen. Beispielsweise können mindestens drei Standbeine für eine Dreipunktlagerung vorgesehen sein. Bei einer Ausführung mit vier Standbeinen können diese in zugeordneten Eckbereichen des Rahmens angeordnet sein. Dies ermöglicht nach dem Abnehmen der Schweißbaugruppe von der landwirtschaftlichen Verteilmaschine ein sicheres Abstellen der abgenommenen Schweißbaugruppe, wobei gleichzeitig mittels der Standfüße ein Abstand zum Boden hergestellt ist.

Die Standbeine können zwischen einer eingefahrenen Transportstellung und einer ausgefahrenen Arbeitsstellung verlagerbar sein. Die Standbeine können zwischen der eingefahrenen Transportstellung und der ausgefahrenen Arbeitsstellung schwenkbar sein. Die Standbeine können in der eingefahrenen Transportstellung und / oder der ausgefahrenen Arbeitsstellung arretierbar sein.

Der Rahmen kann einen sich in horizontaler Richtung erstreckenden unteren Rahmenabschnitt, einen sich in horizontaler Richtung erstreckenden oberen Rahmenabschnitt sowie einen den unteren und den oberen Rahmenabschnitt verbindenden Rahmenabschnitt aufweisen, welche den Aufnahmeraum teilweise begrenzen, wobei die Einfahrtaschen zumindest abschnittsweise in den unteren Rahmenabschnitt integriert gebildet sind. Der den oberen und den unteren Rahmenabschnitt verbindende Rahmenabschnitt kann sich im Wesentlichen in vertikaler Richtung erstrecken. Der untere und der obere Rahmenabschnitt sowie der diese verbindende Rahmenabschnitt sind bei der Ausbildung als einzelne Schweißbaugruppe miteinander verschweißt.

Der Aufnahmeraum kann sich heckseitig öffnen, dort also im Wesentlichen frei von Rahmenabschnitten sein, um so einen Auswurfbereich für das auszubringende Material bereitzustellen. Der Rahmen kann mit einer C- oder U-Form gebildet sein. Der untere Rahmenabschnitt kann einen untersten oder bodennahen Rahmenabschnitt bilden, in den die Einfahrtaschen integriert sind.

An dem unteren Rahmenabschnitt kann eine Kraftübertragungseinrichtung tragend aufgenommen sein, welche eingerichtet ist, eine Antriebskraft auf die Verteilvorrichtung zu übertragen. Der untere Rahmenabschnitt stützt hier die Kraftübertragungseinrichtung, welche hierauf lagert. Mit der Kraftübertragungseinrichtung kann ein Antriebsstrang ausgebildet sein. Die Kraftübertragungseinrichtung kann betreibbar sein, eine drehende Antriebsbewegung zum Antreiben eines Drehverteilsystems mit einer oder mehreren Drehstreuern der Verteilvorrichtung anzutreiben. Eine solche drehende Antriebsbewegung kann beispielsweise von einem Traktor abgegriffen und mittels der Kraftübertragungseinrichtung an der Verteilvorrichtung bereitgestellt werden. Alternativ zu einem mechanischen Antrieb kann ein hydraulischer Antrieb genutzt werden.

Der Vorratsbehälter kann an dem oberen Rahmenabschnitt tragend aufgenommen sein. Der Vorratsbehälter lagert auf dem oberen Rahmenabschnitt und wird so von diesem gestützt oder getragen. Der Vorratsbehälter kann zusammen mit dem Rahmen mit Hilfe eines Gabelstaplers von der landwirtschaftlichen Maschine trennbar oder abnehmbar sein, zum Beispiel von einem Schlepper. Eine solche Ausgestaltung kann zum Beispiel vorgesehen sein, wenn die Verteilmaschine von einem Schlepper getragen oder gehalten wird.

An dem oberen Rahmenabschnitt kann ein Teilvorratsbehälter tragend aufgenommen sein, welcher eingerichtet ist, das auszubringende Material aus dem Vorratsbehälter zu empfangen und an die Verteilvorrichtung abzugeben. Bei dieser Ausführungsform weist die landwirtschaftliche Verteilmaschine in Ergänzung zum Vorratsbehälter, welcher zum Beispiel am Basisrahmen tragend aufgenommen ist, einen Teilvorratsbehälter auf, in welchem das auszubringende Material aus dem Vorratsbehälter zunächst empfangen wird, um es dann aus dem Teilvorratsbehälter an die Verteilvorrichtung dosiert abzugeben. Der Teilvorratsbehälter lagert auf dem oberen Rahmenabschnitt und wird so von diesem gestützt oder getragen. Der Teilvorratsbehälter kann zusammen mit dem Rahmen mit Hilfe eines Gabelstaplers von der landwirtschaftlichen Maschine trennbar oder abnehmbar sein, so zum Beispiel von dem Basisrahmen trennbar sein.

Die Standbeine können an dem unteren Rahmenabschnitt angeordnet sein. Die Standbeine können hierbei zwischen der eingefahrenen Transportstellung und der ausgefahrenen Arbeitsstellung an dem unteren Rahmenabschnitt verlagerbar angeordnet sein, zum Beispiel schwenkbar.

Die Einfahrtaschen können im Wesentlichen vollständig in den Rahmen integriert gebildet sein. Hierbei können die Taschenwände der Einfahrtaschen im Wesentlichen vollständig von Wandabschnitten des Rahmens gebildet sein. Umgekehrt bilden die Taschenwände so Wandabschnitte des Rahmens.

In einer Ausführungsform können die Taschenwände der Einfahrtaschen jeweils ein sich in Fahrt- oder Arbeitsrichtung erstreckendes Rahmenelement des unteren Rahmenabschnitts teilweise oder vollständig bilden. Das jeweilige Rahmenelement kann ein randseitiges oder außenliegendes Rahmenelement des unteren Rahmenabschnitts sein. Zwischen den von den Einfahrtaschen gebildeten Rahmenelementen, zum Beispiel quer zur Fahrt- oder Arbeitsrichtung der landwirtschaftlichen Verteilmaschine im Betrieb, können sich ein oder mehrere weitere Rahmenelemente des unteren Rahmenabschnitts erstrecken, die die von den Einfahrtaschen gebildeten Rahmenelemente wahlweise miteinander verbinden.

Eine Einsteckrichtung der Einfahrtasche, entlang welcher Gabelstaplerzinken einsteckbar sind, kann sich in Fahrt- oder Arbeitsrichtung der Verteilmaschine erstrecken. Hierbei können die Gabelstaplerzinken von einer Heckseite der landwirtschaftlichen Verteilmaschine in die Einfahrtaschen einsteckbar sein.

Es kann vorgesehen sein, dass die Einfahrtaschen nicht nur auf der Rück- oder Heckseite offen sind, sondern auch auf der gegenüberliegenden Vorderseite, welche regelmäßig dem Schlepper zugewandt ist. Auf diese Weise können Gabelstaplerzinken auch von dieser Seite in die Einfahrtaschen eingeführt werden, wenn der Rahmen bzw. die Rahmenbaugruppe, insbesondere die Schweißbaugruppe, getrennt ist, zum Beispiel zum Anheben für Reinigungs-oder Wartungszwecke.

Die Verteilvorrichtung kann mit mindestens einem Wurfscheibenstreusystem gebildet sein. Solche Verteilvorrichtungen nutzen ein oder mehrere Wurf- oder Streuscheiben, die auch als Schleuderscheiben bezeichnet werden, um mittels Drehbewegung der entsprechenden Scheibe das der Verteilvorrichtung zugeführte auszubringende Material zum Verteilen auszuwerfen oder wegzuschleudern. In einer Ausführungsform kann die Verteilvorrichtung mit mehreren Wurfscheibenstreusystemen gebildet sein, die quer zur Fahrt- oder Arbeitsrichtung nebeneinanderliegend angeordnet sind, um das auszubringende Material heckseitig an der landwirtschaftlichen Verteilmaschine auszubringen.

Die Verteilmaschine kann als landwirtschaftliche Düngerstreumaschine ausgeführt sein.

Es kann eine Maschinenkombination mit einem Schlepper, insbesondere Traktor, und der landwirtschaftlichen Verteilmaschine vorgesehen sein. Hierbei kann der Schlepper die landwirtschaftliche Verteilmaschine tragend oder haltend aufnehmen. Alternativ kann die landwirtschaftliche Verteilmaschine als Anhängefahrzeug von dem Schlepper gezogen werden.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine landwirtschaftliche Maschinenkombination mit einer landwirtschaftlichen Verteilmaschine, die als Anhängefahrzeug von einem Schlepper gezogen wird;
- Fig. 2: eine schematische Darstellung einer landwirtschaftlichen Maschinenkombination, bei der eine landwirtschaftliche Verteilmaschine von einem Schlepper gehalten oder getragen wird;
- Fig. 3: eine schematische Darstellung einer Anordnung für eine landwirtschaftliche Verteilmaschine mit einem Vorratsbehälter auf einem Rahmen sowie einer zugeordneten Verteilvorrichtung von hinten;
- Fig. 4: eine schematische perspektivische Darstellung der Anordnung aus Fig. 3 von schräg hinten;
- Fig. 5: eine schematische perspektivische Darstellung der Anordnung aus Fig. 3 von schräg vorn;
- Fig. 6: eine schematische perspektivische Darstellung eines als Schweißbaugruppe ausgeführten Rahmens einer landwirtschaftlichen Verteilmaschine von schräg hinten;
- Fig. 7: eine schematische perspektivische Darstellung des Rahmens aus Fig. 6 von schräg vorn;
- Fig. 8: eine schematische Darstellung des Rahmens aus Fig. 6 von unten;
- Fig. 9: eine schematische Darstellung des Rahmens aus Fig. 6 von oben;
- Fig. 10: eine schematische perspektivischen Darstellung einer weiteren Anordnung für eine landwirtschaftliche Verteilmaschine mit einem Vorratsbehälter auf einem Rahmen sowie einer zugeordneten Verteilvorrichtung von schräg hinten und
- Fig. 11: eine weitere schematische perspektivischen Darstellung der weiteren Anordnung aus Fig. 10.

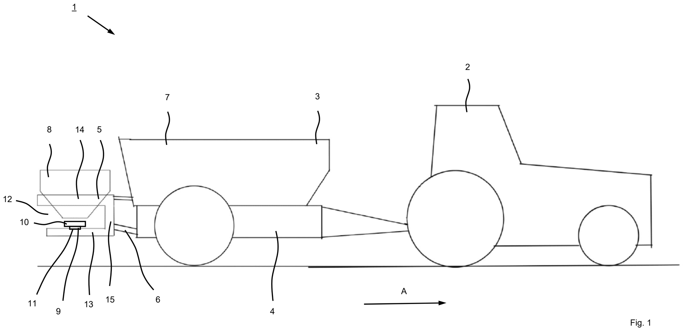

Fig. 1 zeigt eine schematische Darstellung einer landwirtschaftlichen Maschinenkombination 1 mit einem Schlepper 2, beispielsweise Traktor, und einer landwirtschaftlichen Verteilmaschine 3, die von dem Schlepper 2 gezogen wird. Die landwirtschaftlichen Verteilmaschine 3 weist einen Basisrahmen 4 auf, welcher mit einem Rahmen 5 bzw. einer Rahmenbaugruppe gebildet ist, der / die im dargestellten Beispiel einen Teilrahmen des Basisrahmens 4 bildet und abnehmbar oder trennbar ausgebildet ist, indem eine Verbindung 6 lösbar ist.

Der Basisrahmen 4 trägt einen Vorratsbehälter 7, welcher eingerichtet ist, ein mittels der landwirtschaftlichen Verteilmaschine 3 auszubringendes Material aufzunehmen, beispielsweise ein Düngermaterial. Bei dem in Fig. 1 gezeigten Beispiel gelangt das auszubringende Material zunächst aus dem Vorratsbehälter 7, welcher auch als Hauptvorratsbehälter bezeichnet werden kann, in einen Teilvorratsbehälter 8, aus dem dann das auszubringende Material dosiert einer Verteilvorrichtung 9 zugeführt wird, die eingerichtet ist, das auszubringende Material zu empfangen und dann auf einer Arbeitsfläche zu verteilen, zum Beispiel auf einem Feld. Die Verteilvorrichtung 9 ist unterhalb des Teilvorratsbehälters 8 angeordnet und ist im gezeigten Beispiel mit einer Schleuder- oder Wurfscheibe 10 gebildet ist, welche zum Drehen im Verteilbetrieb mittels einer Antriebsbewegung gedreht wird, die über eine Kraftübertragungseinrichtung 11 bereitgestellt wird.

Die Verteilvorrichtung 9 ist in einem Aufnahmeraum 12 angeordnet, welcher heckseitig offen ist, um das Material auszubringen. Der Aufnahmeraum 12 wird von Rahmenabschnitten des Rahmens 5 begrenzt: einem unteren Rahmenabschnitt 13, einem oberen Rahmenabschnitt 14 und einem verbindenden Rahmenabschnitt 15. Der Rahmen 5 ist mittels einer Schweißbaugruppe gebildet, die den unteren Rahmenabschnitt 13, den oberen Rahmenabschnitt 14 sowie den verbindenden Rahmenabschnitt 15 umfasst.

Der der Verteilvorrichtung 9 zugeordnete Antriebsstrang 11 wird vom unteren Rahmenabschnitt 13 gestützt oder lagert auf diesem. Der untere Rahmenabschnitt 13 bildet einen untersten oder bodennahen Rahmenabschnitt des Rahmens 5 und begrenzt so die Bodenfreiheit der landwirtschaftlichen Verteilmaschine 3 im Bereich des Rahmens 5 nach unten hin.

Bei der Ausgestaltung nach Fig. 1 ist der Teilvorratsbehälter 8 auf dem Rahmen 5 angeordnet und wird von diesem gestützt oder getragen.

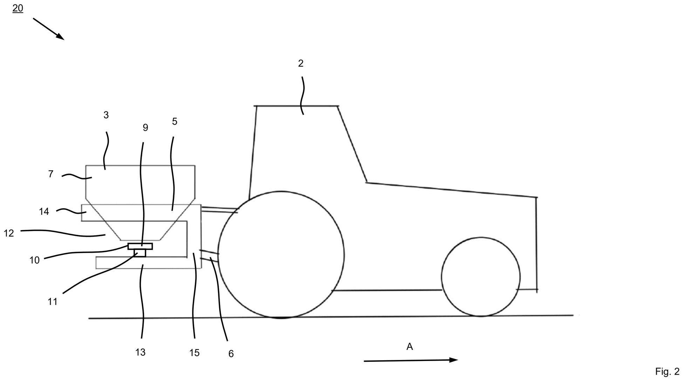

Fig. 2 zeigt eine alternative landwirtschaftliche Maschinenkombination 20. Für gleiche Merkmale werden in Fig. 2 dieselben Bezugszeichen wie in Fig. 1 verwendet. Die landwirtschaftliche Verteilmaschine 3 wird bei der landwirtschaftlichen Maschinenkombination 20 von dem Schlepper 2 getragen oder gehalten. Der Vorratsbehälter 7 lagert auf dem Rahmen 5 und ist mit diesem zusammen vom Schlepper trennbar. Das auszubringende Material gelangt aus dem Vorratsbehälter 7 zur Verteilvorrichtung 9, die im Aufnahmeraum 12 angeordnet ist.

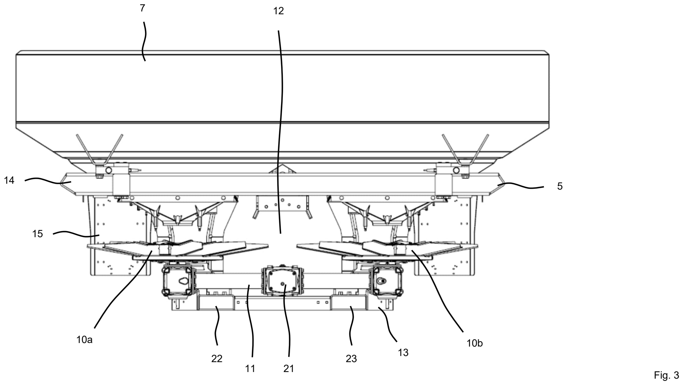

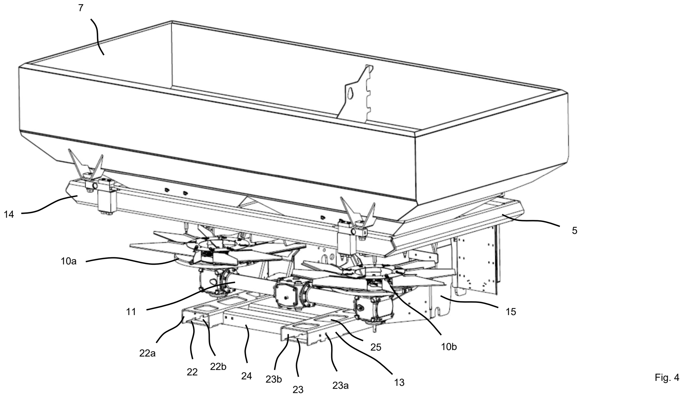

Fig. 3 bis 5 zeigen schematische perspektivische Darstellung einer Anordnung für die landwirtschaftliche Verteilmaschine 3 mit dem Vorratsbehälter 7, dem Rahmen 5 sowie der Verteilvorrichtung 9 im Detail.

In dem vom Rahmen 5 begrenzten Aufnahmeraum 12 weist die Verteilvorrichtung 9 eine erste und eine zweite Wurfscheibe 10a, 10b auf, die jeweils aus den Vorratsbehälter 7 das auszubringende Material empfangen und mittels Drehbetrieb verteilen. Die drehende Antriebsbewegung wird mit Hilfe des Antriebsstrangs 11 bereitgestellt, welcher sich im gezeigten Beispiel quer zur Fahrt- oder Arbeitsrichtung A (vgl. Fig. 1 und 2) erstreckt. Die drehende Antriebsbewegung wird hierbei über eine mittlere Kupplungseinrichtung 21 abgegriffen, zum Beispiel vom Traktor (vgl. Fig. 3).

In den unteren Rahmenabschnitt 13 sind Einfahrtaschen 22, 23 integriert, in welche Gabelstaplerzinken eines Gabelstaplers von der Heckseite aus einfahrbar sind, um die Schweißbaugruppe mit dem Rahmen 5 und dem hierauf gelagerten Vorratsbehälter 7 oder dem Teilvorratsbehälters 8, einschließlich der Verteilvorrichtung 9 aufzunehmen und vom Schlepper 2 (vgl. Fig. 2) oder von der gezogenen landwirtschaftlichen Verteilmaschine (vgl. Fig. 1) abzunehmen.

Die Einfahrtaschen 22, 23 sind bei dem gezeigten Beispiel vollständig in den unteren Rahmenabschnitts 13 integriert bzw. bilden diesen zumindest teilweise. Taschenwände 22a, 23a der Einfahrtaschen 22, 23 umgeben einen jeweiligen Taschenraum 22b, 23b, in welchen die Gabelstaplerzinken in Fahrt- oder Arbeitsrichtung A einsteckbar sind, um den Rahmen 5 und die hieran gebundenen Komponenten anzunehmen oder wieder anzukoppeln.

Die Taschenwände 22a, 23a bilden gleichzeitig Wandabschnitte eines in Fahrt- oder Arbeitsrichtung A verlaufenden Teils des unteren Rahmenabschnitts 13.

Zwischen den in Fahrt- oder Arbeitsrichtung A verlaufenden Teilen des unteren Rahmenabschnitts 13, die aufgrund der integrierten Bauweise zumindest abschnittsweise von den Einfahrtaschen 22, 23 gebildet werden, erstrecken sich weitere Teile 24 des unteren Rahmenabschnitts 13, mit denen eine Rahmenverstärkung ausgebildet sein kann.

Die Einfahrtaschen 22, 23 können zum Beispiel mit einer Breite von etwa 100mm bis etwa 400mm gebildet sein. Die Höhe der Einfahrtaschen 22, 23 kann zum Beispiel in einem Bereich zwischen etwa 30mm und etwa 300mm liegen. Der Abstand zwischen den Einfahrtaschen 22, 23 kann etwa 300mm bis 1000mm betragen.

In den Taschenwänden 22a, 23a sind Öffnungen 25 vorgesehen. Mittels dieser ist zum Beispiel eine Reinigung der Einfahrtaschen 22, 23 erleichtert. Es ist die Wahrscheinlichkeit gemindert, dass sich in den Einfahrtaschen 22, 23 Reste des auszuringenden Materials sammeln. Auch eine Gewichtsminderung ist erreicht.

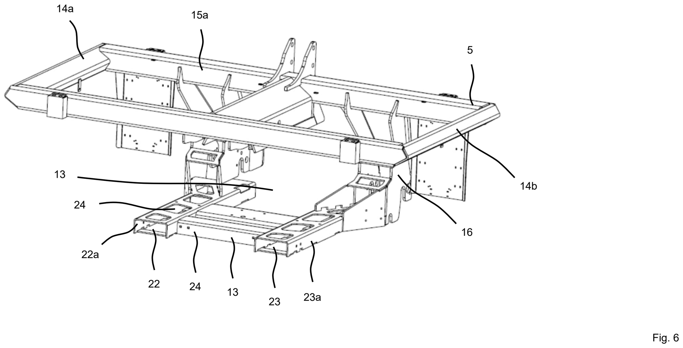

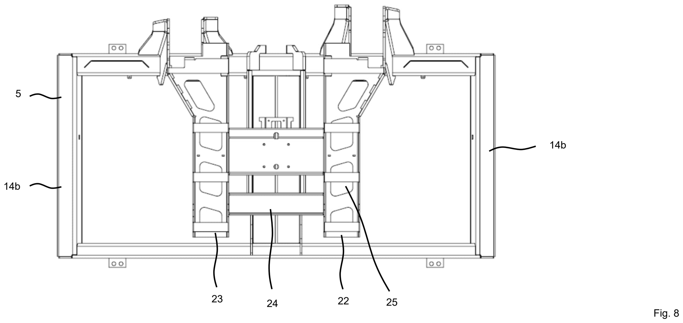

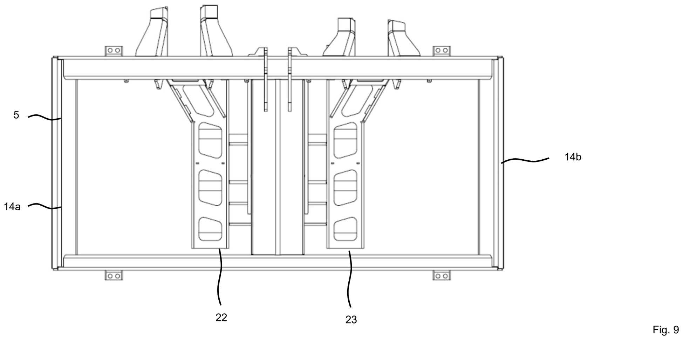

Fig. 6 bis 9 zeigen schematische Darstellungen des Rahmens bzw. der Rahmenbaugruppe 5. Insbesondere aus Fig. 6 ergibt sich, dass der untere Rahmenabschnitt 13, der obere Rahmenabschnitt 14 sowie der verbindende Rahmenabschnitt 15, welcher im gezeigten Beispiel im Wesentlichen in vertikaler Richtung verläuft, mit Blick von der Seite (quer zur Fahrt- oder Arbeitsrichtung) eine C- oder U-förmigen Rahmenform bilden, welche sich zur Heckseite hin öffnet.

Der obere Rahmenabschnitt 14 ist als umlaufender Rahmen mit seitlichen Rahmenabschnitten 14a, 14b gebildet.

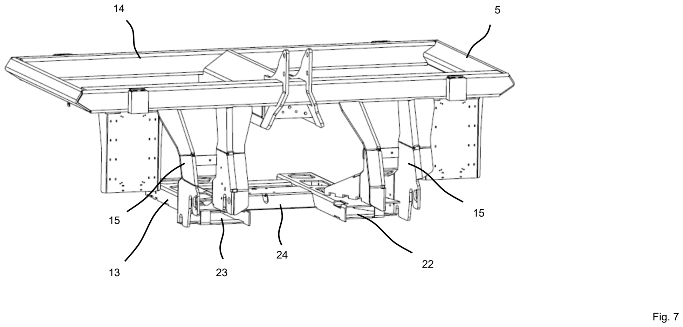

Wie sich insbesondere aus Fig. 7 ergibt, sind die Einfahrtaschen 22, 23 frontseitig, also auf einer dem Schlepper 2 zugewandten Seite offen.

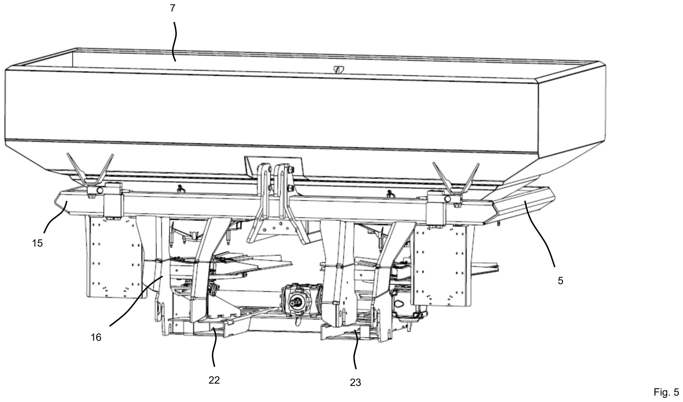

Wie sich insbesondere aus den Fig. 5 und 7 ergibt, sind die Einfahrtaschen 22, 23 auch auf der dem Schlepper 2 zugewandten Seite offen, so dass beim gezeigten Beispiel Gabelstaplerzinken von beiden entgegengesetzten Seite einsteckbar sind.

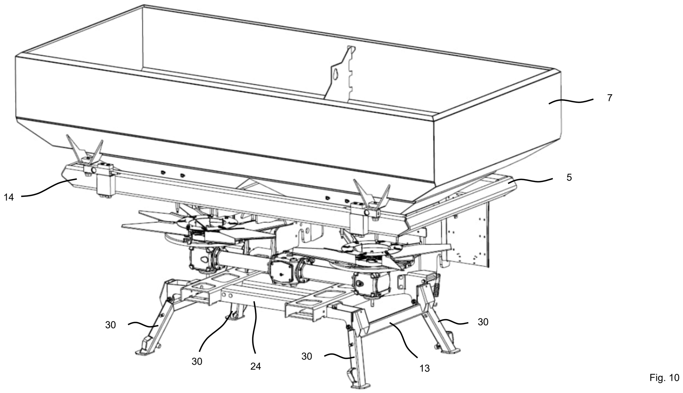

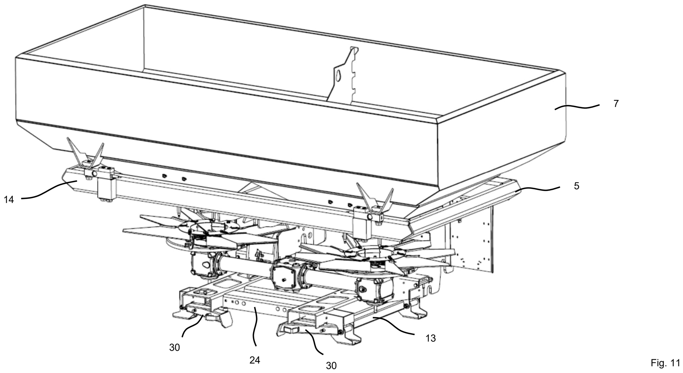

Fig. 10 und 11 zeigen schematische perspektivische Darstellung einer weiteren Anordnung für die landwirtschaftliche Verteilmaschine 3 mit dem Vorratsbehälter 7, dem Rahmen 5 sowie der Verteilvorrichtung 9, wobei am unteren Rahmenabschnitt 13 Standbeine 30 angeordnet sind, die zwischen einer ausgefahrenen Arbeitsstellung (Fig. 10), in welcher die Standbeine 30 den Rahmen 5 beim Abstellen auf dem Boden stützen oder tragen, und einer eingefahrenen Transportstellung (Fig. 11) verlagerbar, insbesondere schwenkbar. Im gezeigten Beispiel sind vier Standbeine 30 in Eckbereichen des unteren Rahmenabschnitts 13 vorgesehen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Landwirtschaftliche Verteilmaschine (1; 20), mit
- einem Vorratsbehälter (7) für ein auszubringendes Material;
- einer Verteilvorrichtung (9), welche betreibbar ist, das auszubringende Material aus dem Vorratsbehälter (7) zu empfangen und zu verteilen;
- einem Rahmen (5), der einen Aufnahmeraum, in welchem die Verteilvorrichtung (9) angeordnet ist, wenigstens teilweise begrenzt; und
- Einfahrtaschen (22, 23) zum Aufnehmen von Gabelstaplerzinken an dem Rahmen (5), wobei die Einfahrtaschen (22, 23) zumindest abschnittsweise in den Rahmen (5) integriert gebildet sind.

2. Verteilmaschine (1; 20) nach Anspruch 1, **dadurch gekennzeichnet, dass** der Rahmen (5) und die Einfahrtaschen (22, 23) als Teil einer Schweißbaugruppe gebildet sind.

3. Verteilmaschine (1; 20) nach Anspruch 2, **dadurch gekennzeichnet, dass** die den Rahmen (5) und die Einfahrtaschen (22, 23) aufweisende Schweißbaugruppe von einem Basisrahmen (4) trennbar ist.

4. Verteilmaschine (1; 20) nach Anspruch 3, **dadurch gekennzeichnet, dass** an dem Rahmen (5) Standbeine (30) angeordnet sind, die eingerichtet sind, die Schweißbaugruppe auf dem Boden abzustellen.

5. Verteilmaschine (1; 20) nach Anspruch 4, **dadurch gekennzeichnet, dass** die Standbeine (30) zwischen einer eingefahrenen Transportstellung und einer ausgefahrenen Arbeitsstellung verlagerbar sind.

6. Verteilmaschine (1; 20) nach mindestens einem der vorangehenden Ansprüche, **dadurch gekennzeichnet, dass** der Rahmen (5) einen sich in horizontaler Richtung erstreckenden unteren Rahmenabschnitt (13), einen sich in horizontaler Richtung erstreckenden oberen Rahmenabschnitt (14) sowie einen den unteren und den oberen Rahmenabschnitt (13, 14) verbindenden Rahmenabschnitt (15) aufweist, welche den Aufnahmeraum (12) teilweise begrenzen, wobei die Einfahrtaschen (22, 23) zumindest abschnittsweise in den unteren Rahmenabschnitt (13) integriert gebildet sind.

7. Verteilmaschine (1; 20) nach Anspruch 6, **dadurch gekennzeichnet, dass** an dem unteren Rahmenabschnitt (13) eine Kraftübertragungseinrichtung (11) tragend aufgenommen ist, welche eingerichtet ist, eine Antriebskraft auf die Verteilvorrichtung (9) zu übertragen.

8. Verteilmaschine (1; 20) nach Anspruch 6 oder 7, **dadurch gekennzeichnet, dass** der Vorratsbehälter (7) an dem oberen Rahmenabschnitt (14) tragend aufgenommen ist.

9. Verteilmaschine (1; 20) nach Anspruch 6 oder 7, **dadurch gekennzeichnet, dass** an dem oberen Rahmenabschnitt (14) ein Teilvorratsbehälter (8) tragend aufgenommen ist, welcher eingerichtet ist, das auszubringende Material aus dem Vorratsbehälter (7) zu empfangen und an die Verteilvorrichtung (9) abzugeben.

10. Verteilmaschine (1; 20) nach mindestens einem der vorangehenden Ansprüche, soweit auf Ansprüche 4 und 6 rückbezogen, **dadurch gekennzeichnet, dass** die Standbeine an dem unteren Rahmenabschnitt (13) angeordnet sind.

11. Verteilmaschine (1; 20) nach mindestens einem der vorangehenden Ansprüche, **dadurch gekennzeichnet, dass** die Einfahrtaschen (22, 23) im Wesentlichen vollständig in den Rahmen (5) integriert gebildet sind.

12. Verteilmaschine (1; 20) nach mindestens einem der vorangehenden Ansprüche, **dadurch gekennzeichnet, dass** sich eine Einsteckrichtung der Einfahrtaschen (22, 23), entlang welcher Gabelstaplerzinken einsteckbar sind, in Fahrt- oder Arbeitsrichtung der Verteilmaschine (1; 20) erstreckt.

13. Verteilmaschine (1; 20) nach mindestens einem der vorangehenden Ansprüche, **dadurch gekennzeichnet, dass** die Verteilvorrichtung (9) mit mindestens einem Wurfscheibenstreusystem gebildet ist.

14. Verteilmaschine (1; 20) nach mindestens einem der vorangehenden Ansprüche, ausgeführt als landwirtschaftliche Düngerstreumaschine.
